# EUROPEAN PATENT SPECIFICATION

(11) **EP 0 961 872 B1**
(45) Date of publication and mention of the grant of the patent: **27.07.2005**
(21) Application number: 98955039.7
(22) Date of filing: 21.10.1998
(51) Int. Cl.: F02B 1/00, F02C 3/14, F02C 3/16, F02C 5/04

(54) **MICRO-COMBUSTION CHAMBER HEAT ENGINE**
MICRO-BRENNKAMMER FÜR THERMISCHEN MOTOR
MOTEUR THERMIQUE A CHAMBRE DE MICRO-COMBUSTION

(30) Priority: 22.10.1997 US 955590
(43) Date of publication of application: 08.12.1999
(73) Proprietor: Ray, James T., Gulf Shores, AL 36542 (US)
(72) Inventor: Ray, James T., Gulf Shores, AL 36542 (US)
(74) Representative: Fenlon, Christine Lesley
(86) International application number: PCT/US1998/022302
(87) International publication number: WO 1999/020877

(56) References cited:
- AU-B- 509 876
- FR-A- 2 414 627
- US-A- 1 260 015
- US-A- 4 024 705
- US-A- 4 304 095

## Description

### BACKGROUND OF THE INVENTION

### 1. Field of the Invention

The present invention relates generally to an engine that produces energy through a process known as Cavitation and Associated Bubble Dynamics, and specifically to a method and apparatus for a combustion engine that uses bubbles within a fluid as the combustion chamber and for providing the combustion thereof. More particularly, the present invention relates to combustion-type engines that require compression and not spark ignition as part of the combustion process. Even more particularly, the present invention relates to an improved combustion engine that uses a fuel source in the form of a combustible fluid material having been mechanically influenced to provide gas bubbles that are rather small and which bubbles contain a combination of oxygen, water and the burnable fuel matter in vapor form. The term "micro-combustion chamber" as used herein is referring to such small gas bubbles. The bubble combustion process creates an expansion that produces force for driving a pair of rotating members within the chamber. These members have vanes that are so positioned that expansion of the combusting matter contained within the bubbles causes these two particular rotating members to rotate in opposite directions relative to one another, therefore, generating torque that is transmitted to a shaft through a gearing arrangement.

### 2. General Background of the Invention

Combustion engines are well known devices for powering vehicles, generators and other types of machinery. Some engines require a spark ignition. Some engines such as diesel type engines only require compression for combustion to occur. Combustion diesel engines use one or more reciprocating pistons to elevate the pressure within a corresponding cylinder in order to achieve combustion.

Among the disadvantages of such engines are inefficiencies caused by heat losses, frictional losses and unharnessed (wasted) work due to the reciprocation of each piston. For example, in a eight cylinder engine, only one cylinder is producing power at any given moment while all eight cylinders are constantly contributing to frictional losses. The reciprocation of each piston also results in unwanted vibration and noise. In addition, due to the relatively low combustion temperatures in such reciprocating piston engines, excessive pollutants such as particulates and carbon monoxide are produced by these engines.

Furthermore, reciprocating piston engines require refined fuel such as gasoline made from cracking of oil that is performed in refineries and costly to produce. Such engines also require complex fuel injection or carburation systems, camshafts, electrical systems and cooling systems that can be expensive and difficult to maintain.

Accordingly, there is a need for more efficient, smoother running and lower emission alternative fuel engines for use in vehicles, generators; and other machinery.

FR-A-2414627 discloses a reaction turbine engine device with rotary combustion chambers constituted by a stator with fixed blades and a rotor inside which are included 2 appropriate combustion chambers, a centrifugal central supercharger supplied by a carburettor, external reaction blades in a ring, two electrical ignition spark plug sockets, all complemented by a counter-flow exchanger and an exhaust tube, the latter being comprised of two ports located 90° from the outlet of the combustion chambers of the rotor.

US-A-4024705 discloses a jet type engine including (a) a rotor of full circular form having an output shaft rotatable about an axis; (b) a combustion chamber near the periphery of said rotor; (c) a combustion supporting fluid passageway in said rotor extending from an inner portion of said rotor to said combustion chamber, and a fuel channel in said rotor extending to said combustion chamber, there being means whereby rotation of said rotor causes the combustion supporting fluid in said passageway to be compressed and heated prior to entering said combustion chamber; (d) a jet channel in said rotor in communication with said combustion chamber to exhaust the burned fuel from said combustion chamber and produce a jet reaction, the burning of said fuel being produced at least in part as a result of the heating of said combustion supporting fluid in its passage through said passageway; (e) a turbine structure rotatably supported about said axis and including means against which said burned fuel impinges to rotate said turbine structure; and (f) means to prevent said turbine structure from rotating as fast as said rotor.

Notably, neither FR-A-2414627 nor US-A-4024705 disclose that combustion occurs between vanes of rotating chambers.

### BRIEF SUMMARY OF THE INVENTION

It is an object of the present invention to overcome one or more of the problems described above.

In accordance with one aspect of the present invention, a method for increasing the pressure of a fluid in a combustion engine is provided. The method comprises the steps of: creating a bubble of gaseous material within a fluid; elevating the pressure within the bubble to a level such that the temperature inside the bubble reaches a flash point; and obtaining combustion within the bubble.

In accordance with another aspect of the present invention, a method for generating torque on a rotating shaft is provided. The method comprises.the steps of: providing a chamber connected to the shaft for rotation therewith, the chamber having a fluid inlet and a fluid outlet; feeding a fluid into the chamber, the fluid including at least one gaseous bubble; elevating the pressure within the bubble to a level such that the temperature inside the bubble reaches a flash point; and producing combustion within the bubble to elevate the pressure of fluid in the chamber, thereby driving fluid through certain member vanes producing torque and then out through the chamber fluid outlet.

In accordance with yet another aspect of the present invention, a combustion engine comprises a pump, a fluid reservoir, a drive shaft having a passage therein, and a high pressure chamber fixedly attached to the drive shaft for rotation therewith.

The high pressure chamber contains a compression drive unit including one or more compression drives blades fixedly attached on the drive shaft, a combustion channel unit rotatably journalled on the drive shaft and containing one or more combustion channels, an impulse drive unit including one or more impulse drives blades rotatable journalled on the drive shaft, and a planetary gear set.

The planetary gear set includes a ring gear fixedly attached to one of two end plates that are fixedly attached to the drive shaft for rotation therewith, a sun gear fixedly attached to the impulse drive unit for rotation therewith, and one or more planet gears. Each planet gear is rotatable journalled on the combustion channel unit at a location radially intermediate the sun gear and the ring gear and in meshing engagement with the sun gear and the ring gear.

Therefore, the present invention provides a combustion engine of improved configuration that burns matter contained within small bubbles of a fluid stream, combust these bubbles and produces torque on the shaft.

The apparatus includes a housing with an interior for containing fluid in a reservoir section. A rotating drive shaft is mounted in the housing and includes a portion that extends inside the housing interior above the fluid reservoir.

A chamber is mounted on the drive shaft within the housing interior for rotation therewith.

The chamber includes a power generating system or unit that is positioned within the chamber interior for rotating the drive shaft when fluid flow and bubble combustion take place within the chamber interior. Fluid is provided to the power generating unit via circulation conduit that supplies fluid from the reservoir to the chamber power generating system preferably via a bore that extends longitudinally through the drive shaft and then transversely through a port and into the chamber.

Within the chamber, the fluid follows a circuitous path through various rotating and non-rotating parts. These parts include at least three rotating members each with vanes thereon, the respective vanes being closely positioned with a small gap therebetween so that when the rotating members are caused to rotate in a given rotational direction, the bubbles are compressed and combustion of the material in the small bubbles occurs and torque is produced.

A starter is used to preliminarily rotate the shaft and initiate fluid flow. The fluid flow centrifugally causes the respective internal chamber members to rotate. The respective rotating members are so configured and geared, that when they are rotated, they will rotate at different speeds and in relative opposite rotational directions due to the force cause by the fluid flow, however, they will try to rotate in the same direction due to the force cause by the gearing. These conflicting forces configure a fluid flow design that provides a high pressure zone and produces bubble compression. Bubble combustion occurs when two things happen. First, the bubble critical compression produces a sufficiently high temperature in the bubble nucleus to initiate burn. Second, the bubble pressure is lowered. These two steps define one complete combustion cycle. The bubble high pressure and low pressure points occur at the interface between two of the rotating members. The bubble combustion occurs just before the bubble leaves the compression pressure zone. The bubble combustion will apply force in two different fields of direction. This combustion process produces a net expansion force that causes the blades of the two interfacing members to separate and, thereby, causes the two interfacing members proper to rotate in opposite rotational directions.

A gear mechanism is used to transfer the rotary power from both of the two rotating members to the drive shaft. The objectives and other advantages of the invention will be realized and attained by the apparatus and method particularly pointed cut in the written description and claims hereof, as well as, the appended drawings.

### BRIEF DESCRIPTION OF THE DRAWINGS

For a further understanding of the nature, objects, and advantages of the present invention, reference should be made to the following detailed description and read in conjunction with the following drawings, wherein like reference numerals denote like elements and wherein:
Figure 1 is a perspective view of the preferred embodiment of the apparatus of the present invention;
Figure 2 is another perspective view of the preferred embodiment of the apparatus of the present invention;
Figure 3 is a partially cutaway front elevational view of the preferred embodiment of the apparatus of the present invention;
Figure 4 is a partial top view of the preferred embodiment of the apparatus of the present invention illustrating the chamber, flinger plate, and drive shaft;
Figure 5 is a sectional view taken along lines 5-5 of Figure 4;
Figure 6 is a sectional view taken along lines 6-6 of Figure 5;
Figure 7 is a sectional view taken along lines 7-7 of Figure 5;
Figure 8 is a sectional view taken along lines 8-8 of Figure 5;
Figure 9 is a fragmentary enlarged view of the vane and combustion interface, an enlargement of a portion of Figure 7 that is encircled in phantom lines;
Figure 10 is a partial perspective exploded view of the preferred embodiment of the apparatus of the present invention illustrating the combustion channels unit and impulse drive unit portions thereof;
Figure 11 is a perspective fragmentary view of the preferred embodiment of the apparatus of the present invention illustrating the compression drive unit;
Figure 12 is a perspective exploded partially cutaway view of the preferred embodiment of the apparatus of the present invention illustrating the working parts mounted on the drive shaft;
Figure 13 is a perspective view of a second embodiment of the apparatus of the present invention;
Figure 14 is another perspective view of the second embodiment of the apparatus of the present invention;
Figure 15 is a partially cut away front elevational view of the second embodiment of the apparatus of the present invention;
Figure 16 is a partial top view of the second embodiment of the apparatus of the present invention illustrating the chamber, flinger plate, and drive shaft;
Figure 17 is a sectional view taken along lines 17-17 of figure 16;
Figure 18 is a sectional view taken along lines 18-18 of Figure 17;
Figure 19 is a sectional view taken along lines 19-19 of Figure 17;
Figure 20 is a sectional view taken along lines 20-20 of Figure 17;
Figure 21 is a sectional view taken along lines 21-21 of Figure 17;
Figure 22 is a sectional view taken along lines 22-22 of Figure 17;
Figure 23 is an enlarged fragmentary view of the second embodiment of the apparatus of the present invention showing an enlargement of a portion of Figure 20 and combustion that takes place at an interface between the torque drive blades and combustion channel blades;
Figure 24 is a partial exploded perspective view of the second embodiment of the apparatus of the present invention; and
Figure 25 is a fragmentary sectional elevational view of the alternate embodiment of the apparatus of the present invention illustrating fluid flow and combustion at the interface between torque drive blades and combustion channel blades.

### DETAILED DESCRIPTION OF THE INVENTION

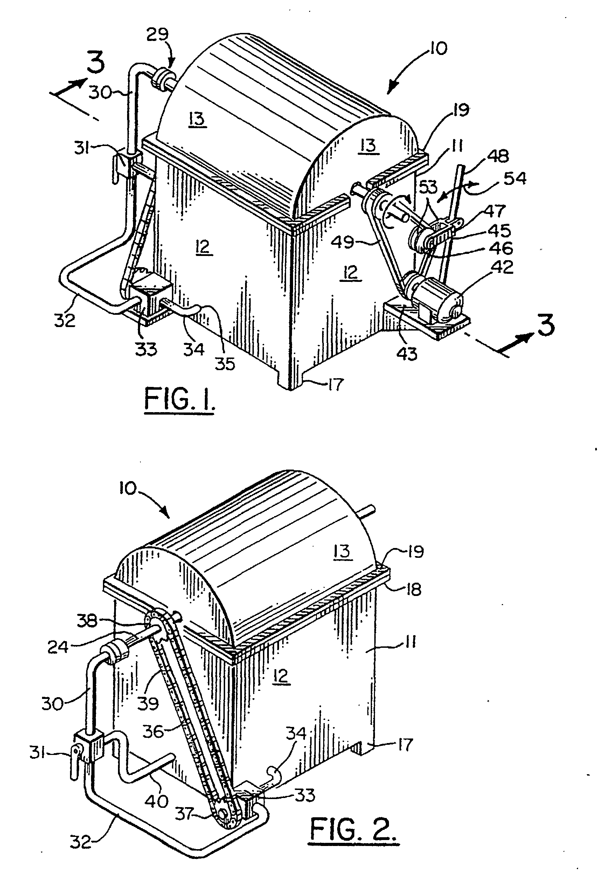

Figures 1-4 show generally the preferred embodiment of the apparatus of the present invention designated generally by the numeral 10 in Figures 1, 2, and 3. Combustion engine 10 has an enlarged housing 11 with an interior 14. The housing 11 is comprised of upper and lower sections including a lower reservoir section 12 and an upper cover section 13.

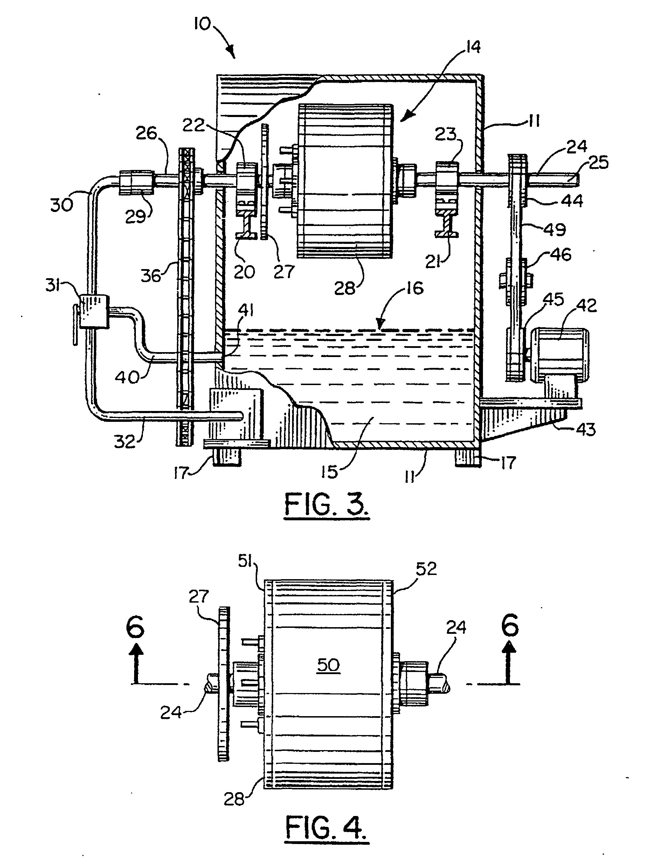

Fluid 15 is contained in the lower portion of reservoir section 12 as shown in Figure 3, the fluid 15 having a fluid level 16 that is well below chamber 28 and drive shaft 24. The fluid can be most any combustible fluid including automatic transmission fluid, hydraulic fluid, vegetable oil, corn oil, peanut oil, for example. A plurality of feet 17 can be used to anchor housing 11 to a pedestal, mount, concrete base, or like structural support. A pair of sealing mating flanges 18, 19 can be provided respectively on housing sections 11, 12 to form a closure and seal that prevents leakage during use.

A pair of spaced apart transversely extending beams 20, 21 such as the I-beams shown, can be welded to housing reservoir section 12 providing structural support for supporting drive shaft 24 and its bearings 22, 23. The drive shaft 24 is to be driven by a rotating member contained within chamber 28 as will be described more fully hereinafter. For reference purposes, drive shaft 24 has a pair of end portions including starter end portion 25 and fluid inlet end portion 26. Drive shaft 24 carries chamber 28 and flinger plate 27.

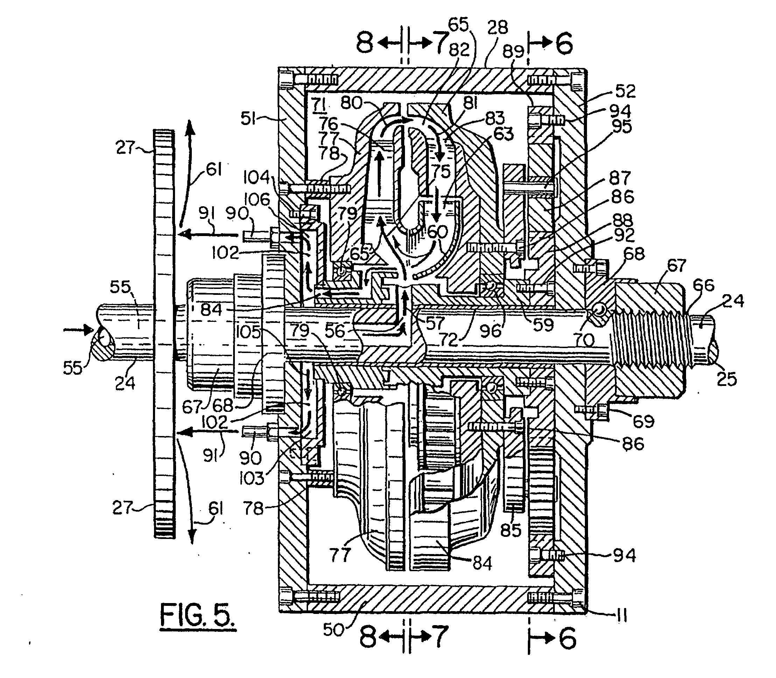

In Figure 4, the chamber 28 including its cylindrically-shaped wall portion 50 and its circular end walls 51, 52 is mounted integrally to and rotates with shaft 24. Similarly, flinger plate 27 is connected integrally to and rotates with shaft 24. The flinger plate 27 is used to aerate the liquid 15 after it has been transmitted to chamber 28 and exists therefrom through a plurality of jets 90 (see Figure 5). The fluid exits via jets 90 and 15 strikes the flinger plate 27 which is rotating with shaft 24 during use. Plate 27 throws the fluid 15 radially away from plate 27 due to the centrifugal force of plate 27 as it rotates with shaft 24.

The circulation of fluid 15 through the apparatus 10 begins at reservoir section 12 wherein a volume of liquid 15 is contained below fluid surface 16 as shown. The complete travel of fluid 15 through the apparatus 10 is completed when fluid exits chamber 28 and strikes flinger plate 27, being thrown off flinger plate 27 as shown by arrow 61 in Figure 5 to strike housing 11 and then drain to reservoir section 12 of housing 11. This exiting of fluid 15 from chamber 28 so that it strikes flinger plate 27 creates very small bubbles in fluid 15 that will be the subject of combustion when that aerated fluid 15 again enters chamber 28 via shaft 24 bore 55 as will be described more fully herein.

In Figures 1-3, fluid 15 from reservoir section 12 is first pumped with pump 33 to flow outlet line 32. This is accomplished initially with a starter motor 42 that rotates shaft 24. The rotating shaft 24 then rotates pump 33 using power take off 36.

Fluid is transferred from reservoir section 12 via outlet port 35 to suction line 34. Fluid flows from suction line 34 to pump 33 and then to flow outlet line 32. The fluid then flows through control valve 31 to flow inlet line 30. A bypass line 40 enables a user to divert flow at control valve 31 so that only a desired volume of fluid enters flow inlet line 30 and hollow bore 55 of shaft 24 at rotary coupling 29. Once fluid 15 is transmitted to bore 55, it flows into the interior 71 of chamber 28 for use as a source of combustion as will be described more fully hereinafter.

Shaft 24 is connected to flow inlet line 30 with a rotary fluid coupling 29. Power take off 36 can be in the form of a pair of sprockets 37, 38 connected to pump 33 and drive shaft 24 respectively as shown in Figure 2. A chain drive 39 can be used to connect the two sprockets 37, 38. Rotation of the drive shaft 24 thus effects a rotation of the pump 33 so that fluid will be pumped from reservoir section 12 of housing 11 via lines 30, 32 to bore 53 of shaft 24 once starter motor 42 is activated. If fluid 15 is to be bypassed using bypass 40, it is simply returned to reservoir section 12 via bypass line 40 and port 41.

Starter motor 42 can be an electric or combustion engine for example. The motor 42 is mounted upon motor mount 43. Shaft 24 provides a sheave 44. Motor drive 42 has a sheave 45. A sheave 46 is provided on clutch 53. The sheaves 44, 45, 46 are interconnected with drive belt 49. Clutch 53 also includes a sheave support 47 and a lever 48 that is pivotally attached to mount 43 and movable as shown by arrow 54 in Figure 1.

In order to initiate operation, fluid is pumped using pump 33 and motor 42 from reservoir 15 into bore 55 of shaft 24 and then into transverse port 56. Fluid 15 is picked up by compression drive blades 76 and is centrifugally thrown around and across to combustion channel blades 83 (see arrows 80, 81). Fluid at arrow 81 strikes combustion channel blades 83 and rotates them clockwise in relation to starter 24 end of drive shaft 24. Continued fluid flow in the direction of arrow 81 causes fluid 15 to hit vanes 63 of impulse drive unit 60, rotating unit 60 counter clockwise in relation to the starter end 24 of shaft 24.

Fluid then returns along the impulse drive unit 60 to exit channels 101 (see arrow 84). Since there are only two channels 101, some fluid 15 recirculates to blades 76. Fluid exiting channels 101 enters reservoir 102 and then exits chamber 28 at outlet jets 90 to strike flinger plate 27. At plate 27 the liquid 15 is thrown by centrifugal force to housing 11 where it drains into reservoir section 12.

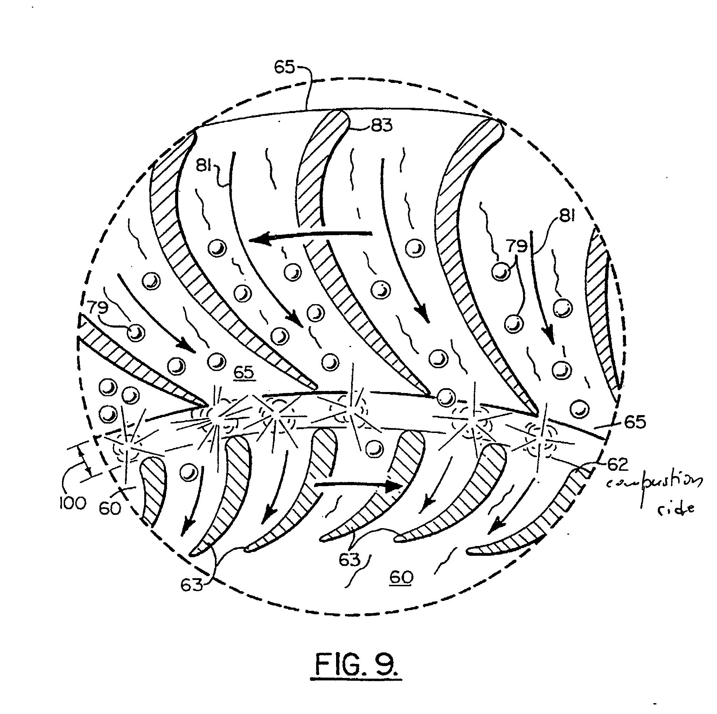

In order to start the engine 10, the user cranks the starter motor 42 until drive shaft 24 rotates to a desired RPM. On an actual prototype apparatus 10, the starter motor 42 is cranked until the drive shaft 24 reaches about 1600 RPM's. At that time, the small air bubbles (containing oxygen and vapor from the fluid 15) begin to burn at the combustion site designated as 62 in Figure 9 so that the shaft 26 is driven. When the matter in these bubbles begins to burn, the bubbles expand. In Figure 9, vanes 63, 83 on two rotary parts 60, 65 capture this expansion. The vanes 63, 83 are so positioned and shaped that the rotary parts 60, 65 rotate in opposite directions. These two rotary parts are the impulse drive unit 60 and the combustion channels unit 65. These rotary parts 60 and 65 are part of a mechanism contained within chamber 28.

The inner workings of chamber 28 are shown more particularly in Figures 4-8. Shaft 29 supports chamber 28. The chamber 28 end plates 51, 52 are rigidly fastened to shaft 24 and rotate therewith. In Figure 5, the starter end 25 of shaft 24 has an externally threaded portion 66 that accepts lock nut 67. Lock ring 68 bolts to end plate 52 at bolted connections 69. Key 70 locks lock ring 68 and thus end plate 52 to shaft 24. Such a lock ring 68 and lock nut 67 arrangement is used to affix end plate 51 to the fluid inlet end portion 26 of shaft 24.

The combination of end plates 51, 52 and cylindrical canister 50 define an enclosure with an interior 71 to which fluid is transmitted during use for combustion. Fluid that enters shaft bore 55 passes through transverse passageway 56 in the direction of arrow 57 to interior 71 of chamber 28. Bearing 72 is mounted on shaft 24 in between end plates 51, 52. Sleeve 73 is mounted on bearing 72. Transverse openings through shaft 24, bearing 72 and sleeve 73 define transverse flow passage 56.

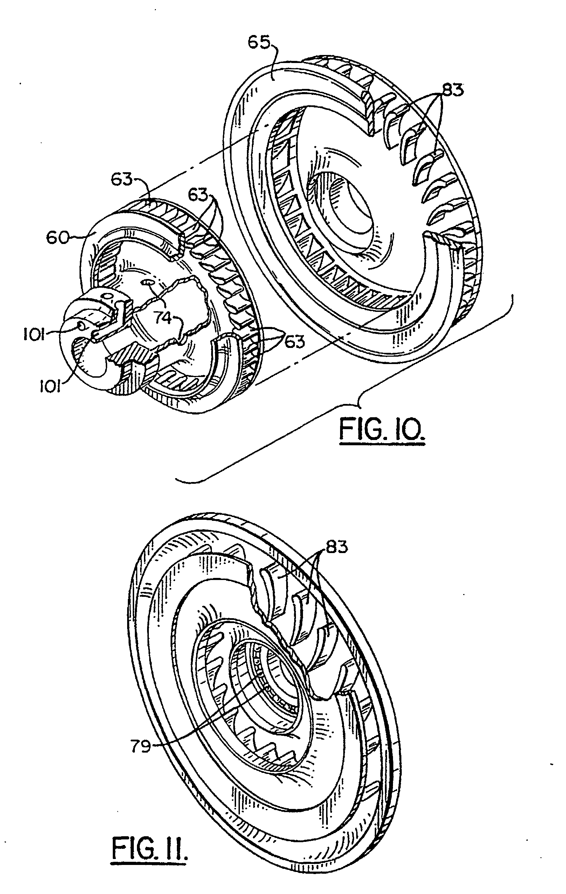

Impulse drive unit 60 (Figures 5 and 10) is rotatably mounted with respect to shaft 24, being journalled on shaft 24 at transverse passageway 56. A plurality of preferably four radially extending flow outlet openings 74 enable flow to continue on a path extending radially away from shaft 24 as shown by arrows 75 in Figure 5. The flow the passes through blades or vanes 76 of compression drive unit 77, a part that is affixed to end plate 51 at bolted connections 78. Bearings 79 can form a load transfer interface between compression drive unit 77 and sleeve 73. The fluid 15 passes over vanes 76 of compression drive unit 77 and radially beyond vanes 76 as shown by arrow 80 in Figure 5 due to centrifugal force as shaft 24 and chamber 28 are rotated (initially by starter motor 42). Bearing 96 rotatably mounts compression channels unit 65 to sleeve 59.

Fluid 15 travels from compression drive blades 76 across cavity 82 in the direction of arrows 80, 81 to combustion channel blades 63 of combustion channels unit 65. Continued fluid flow brings fluid 15 to and through the blades or vanes 63 of impulse drive unit 60.

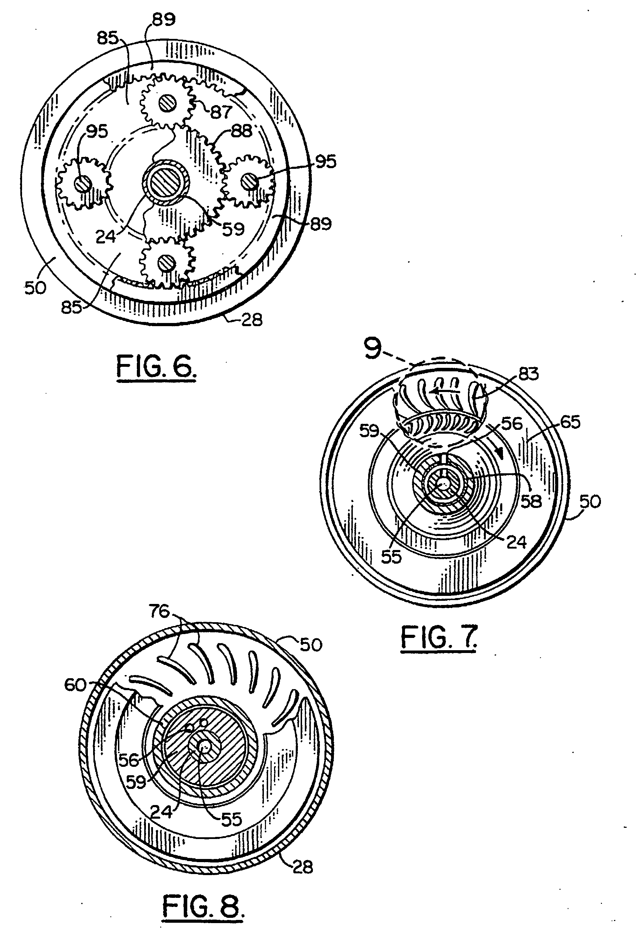

Combustion occurs at the interface of combustion channel blades 83 and the impulse drive blades 63. These respective blades 63 and 83 are very close together (see Figures 7 and 9) so that severe turbulence causes rapid compression of these bubbles 79 and combustion of their contents (fluid 15 vapor and oxygen). The combustion of the matter within these bubbles 79 causes rapid expansion. This combination of expansion and the shapes of the blades 63, 83 drives the impulse drive unit 60 and combustion channel unit in opposite rotary directions (see Figure 9).

When viewed from the starter end 25 of shaft 24 (see Figures 7 and 9) the impulse drive unit 60 rotates counter clockwise and the combustion channels unit 65 rotates counter clockwise. A mix of incoming fluid (arrow 76 in Figure 5) and outgoing fluid (arrow 84 in Figure 5) occurs at 85 before fluid 15 exits chamber 28 at fluid outlet jets 90 in plate 51 as shown by arrows 91.

Combustion channel unit 65 is bolted to combustion channel inner housing 84 and rotates with it. This assembly of unit 65 and housing 84 are bolted to planet gear mounting plate 85 and rotates therewith. Bolted connection 86 affixes planet gear mounting plate 85, combustion unit inner housing 84 and combustion channels unit 65 together.

A plurality (preferably four) planet gears 87 are rotatably mounted ninety degrees (90°) apart to planet gear mounting plate at rotary bushings 95. Ring gear 89 is bolted at connections 94 to end plate 52 and rotates therewith.

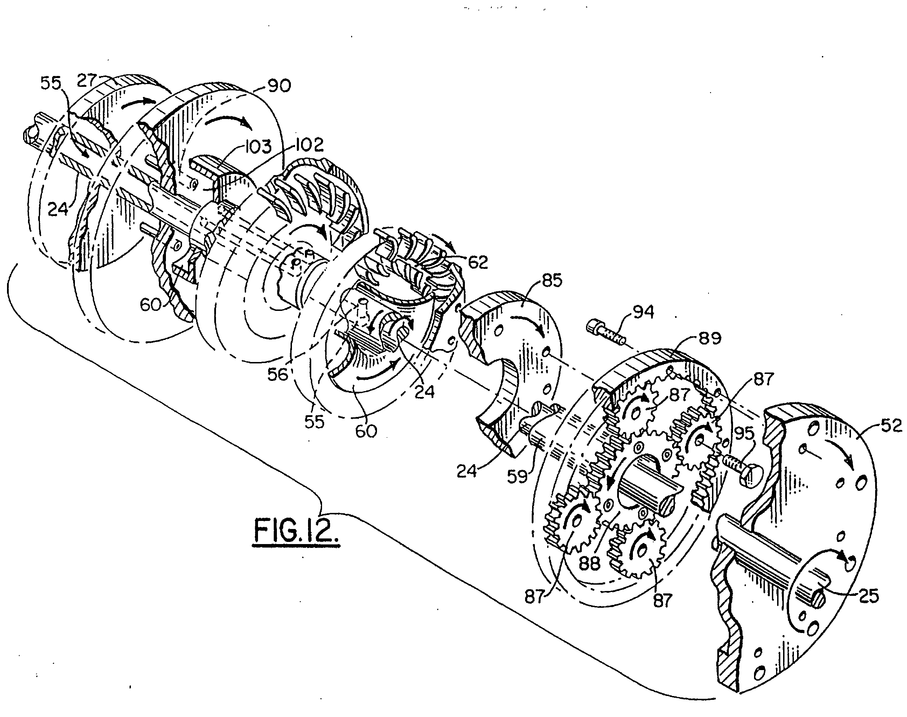

When viewed from the starter end 25 of shaft 24, the planet gear mounting plate 85 rotates clockwise (see Figure 12) during combustion as do the combustion channel unit 65 and combustion channel inner housing 84 all bolted together as an assembly. However, because of the planetary gearing 87, 88, 89 these parts 65, 84, 85 rotate slower than shaft 24.

Sun gear 88 is mounted to impulse drive unit 63 with sleeve 59. Sun gear 88 can connect to sleeve 59 at belted connections 32. A splined connection 93 can connect sleeve 59 to impulse drive unit 63. Thus, combustion at the impulse drive unit blades 63 (see Figure 9) rotates the impulse drive unit 60 counter clockwise (relative to shaft 24 starter end 25) and sleeve 59 connects that counter clockwise rotation to sun gear 88.

Power to drive shaft 24 is generated as follows. Rotational directions are in relation to the starter end 25 of shaft 24 (see Figure 12). Impulse drive unit 60 and combustion channels unit 65 rotate in opposite rotational directions once the starter motor generates rotation of shaft 24 and initiates fluid flow to a rotational speed of about 1600 rpm. Fluid pumped with pump 33 enters shaft bore 57 and chamber 28 interior via transverse passageway 56. Fluid 15 flow travels over blades 76 of compression drive unit 77 (see arrows 79, 80, 81) to the interface between blades 63 and 33 (see Figure 9). Initially, fluid flow generated by pump 33 causes fluid 15 flow in the direction of arrows 81 (Figures 5, 8, and 9) to rotate impulse drive unit 60 in a counter clockwise direction and combustion channels unit 65 in a clockwise direction. Once rotational speed of shaft 24 reaches about 1600 rpm, the material in bubbles 79 in between blades 63 of impulse drive unit 60 and blades 83 of combustion channel unit 65 burns.

Compression of the bubbles 79 at this interface 62 between blades 63 and 83 causes combustion of the fluid vapor-oxygen mixture inside each bubble 79 much in the same way that compression causes ignition and combustion in diesel type engines without the necessity of a spark. In Figure 9, the gap 100 in between blades 63 and 83 is very small, being about 40 mm.

Fluid 15 return to reservoir section 12 is via flow channels 101 in drive unit 60 and then to annular reservoir 102 that communicates with jets 90. Reservoir 102 is defined by generally cylindrically shaped receptacle 103 bolted at 104 to end wall 51. A loose connection is made at 105 in between receptacle 103 and impulse drive unit 60. Arrows 106 show fluid flow through impulse drive unit 60 flow channels 101 to reservoir 102.

If impulse drive unit 60 and sun gear 88 rotate counter clockwise and the planet gears 87 (and the attached planet gear mounting plate 85, combustion unit inner housing 84 and combustion channels unit 65) rotate clockwise, the ring gear 89 and right end plate 52 (mounted rigidly to shaft 24) rotate clockwise at a faster rotary rate than impulse drive unit 60 and sun gear 88 due to the planetary gear (87, 88, 89) arrangement. This can be a 3-1 gear ratio.

The engine 10 of the present invention is very clean, not having an "exhaust" of any appreciable amount. Residue of combustion is simply left behind in the fluid 15.

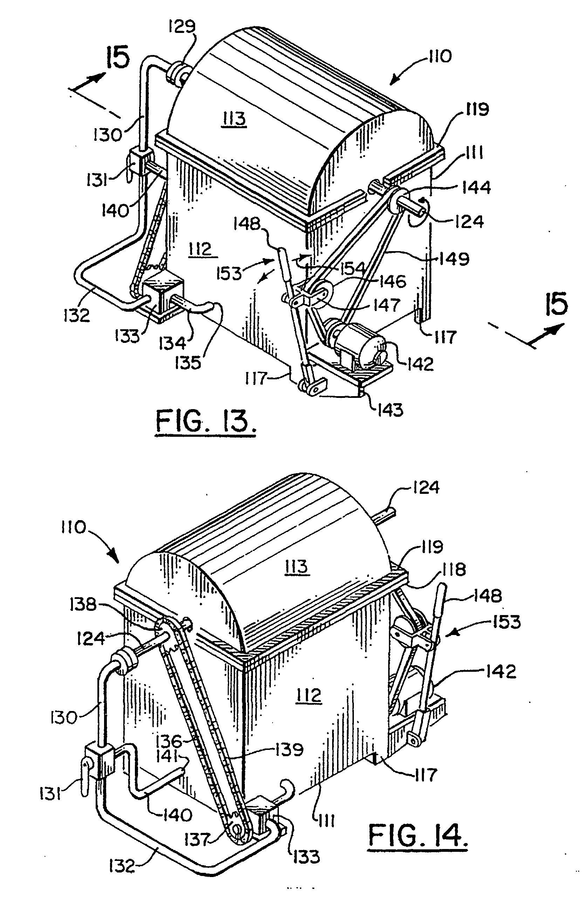

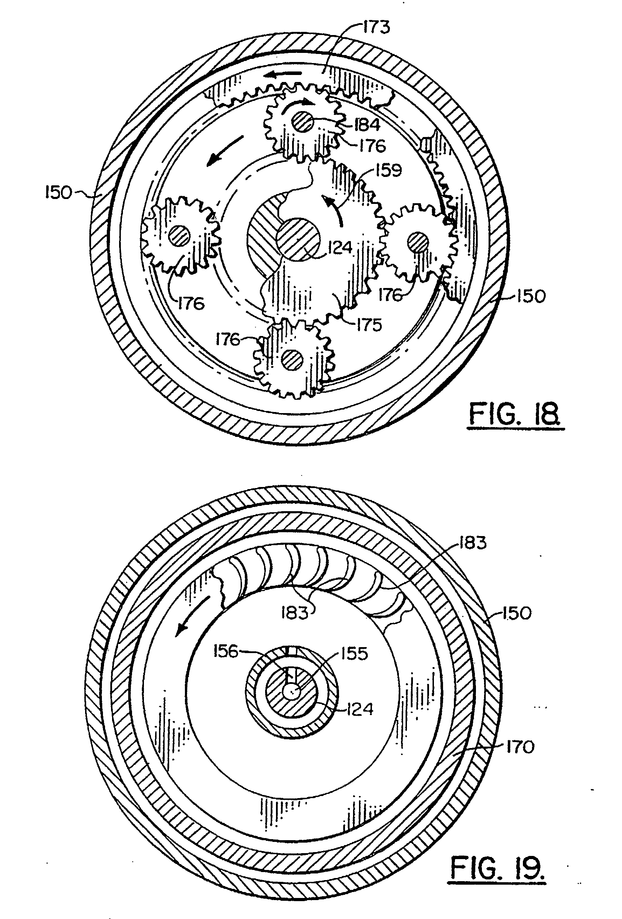

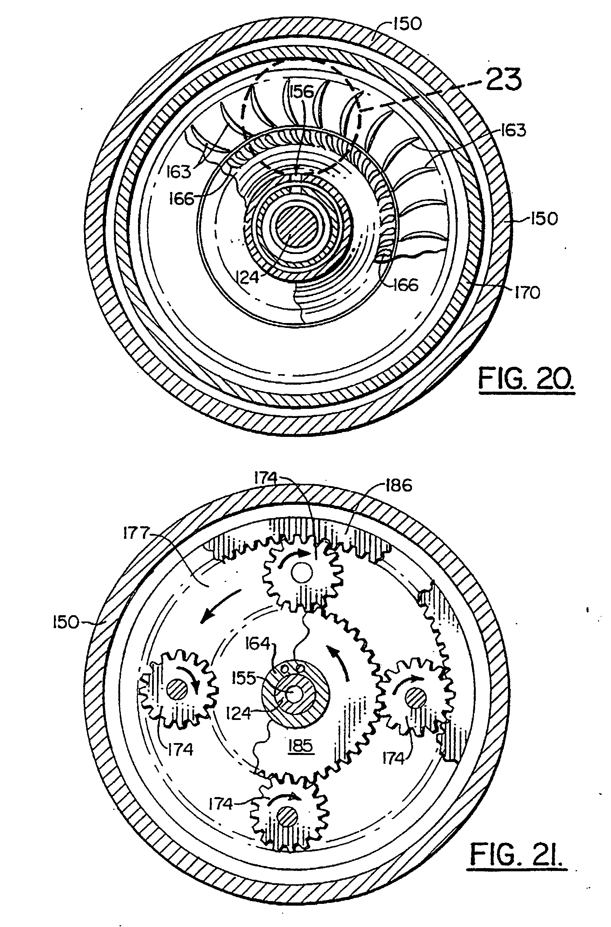

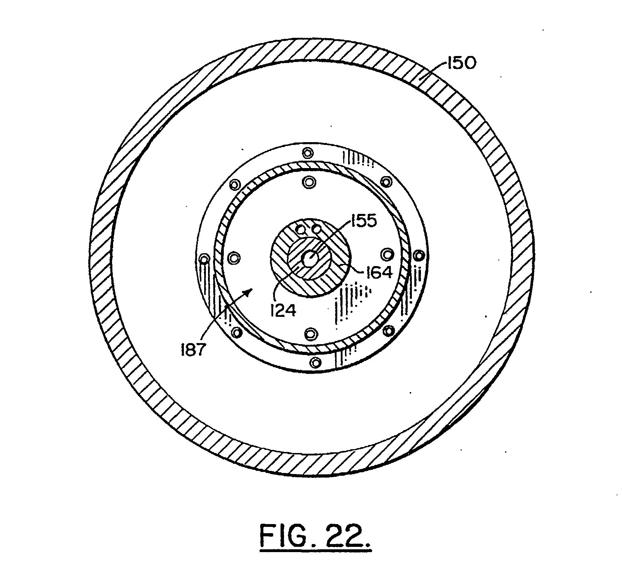

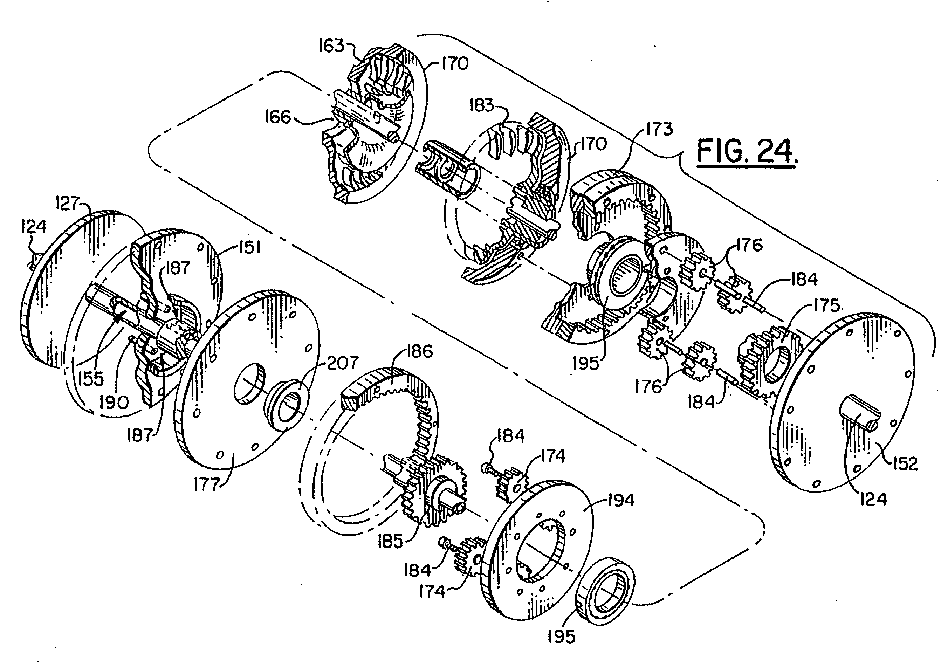

Figures 13-25 show a second embodiment of the apparatus of the present invention designated generally by the numeral 110 in Figures 13, 14, and 15. Combustion engine 110 has an enlarged housing 111 with an interior 114. The housing 111 is comprised of upper and lower sections including a lower reservoir section 112 and an upper cover section 113.

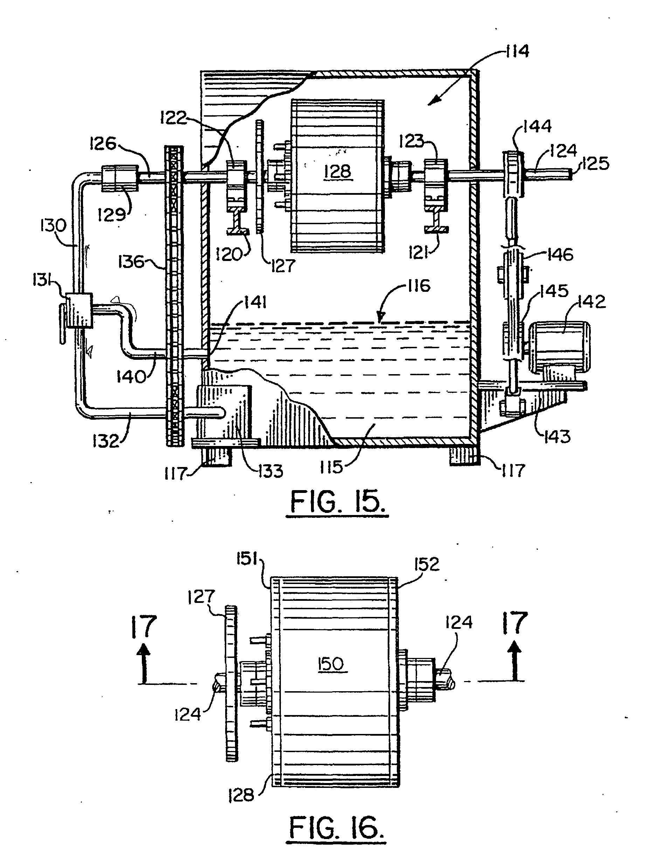

Fluid 115 is contained in the lower portion of reservoir section 112 as shown in Figure 15, the fluid 115 having a fluid level 116 that is well below chamber 128 and drive shaft 124. The fluid can be any combustible fluid including automatic transmission fluid, hydraulic fluid, vegetable oil, corn oil, or peanut oil, for example. A plurality of feet 117 can be used to anchor housing 111 to a pedestal, mount, concrete base, or like structural support.

A pair of sealing mating flanges 118, 119 can be provided respectively on housing sections 112, 113 to form a closure and seal that prevents leakage during use.

A pair of spaced apart transversely extending beams 120, 121 such as the I-beams shown, can be welded to housing reservoir section 112 providing structural support for supporting drive shaft 124 and its bearings 122, 123. The drive shaft 124 is to be driven by a rotating member contained within chamber 128 as will be described more fully hereinafter. For reference purposes, drive shaft 124 has a pair of end portions including starter end portion 125 (right end portion) and fluid inlet end portion 126 (left end portion). Drive shaft 124 carries chamber 128 and flinger plate 127.

In Figures 15-16, the chamber 128 including its cylindrically-shaped wall portion 150 and its circular end walls 151, 152 is mounted integrally to and rotates with shaft 124. Similarly, flinger plate 127 is connected integrally to and rotates with shaft 124. The flinger plate 127 is used to aerate the liquid 115 after it has been transmitted to interior 171 of chamber 128 and exits therefrom through a plurality of jets 190 (see Figures 15, 16, 17). The fluid 115 exits via jets 190 and strikes the flinger plate 127 which is rotating with shaft 124 during use. Plate 127 throws the fluid 115 radially away from plate 127 due to the centrifugal force of plate 127 as it rotates with shaft 124.

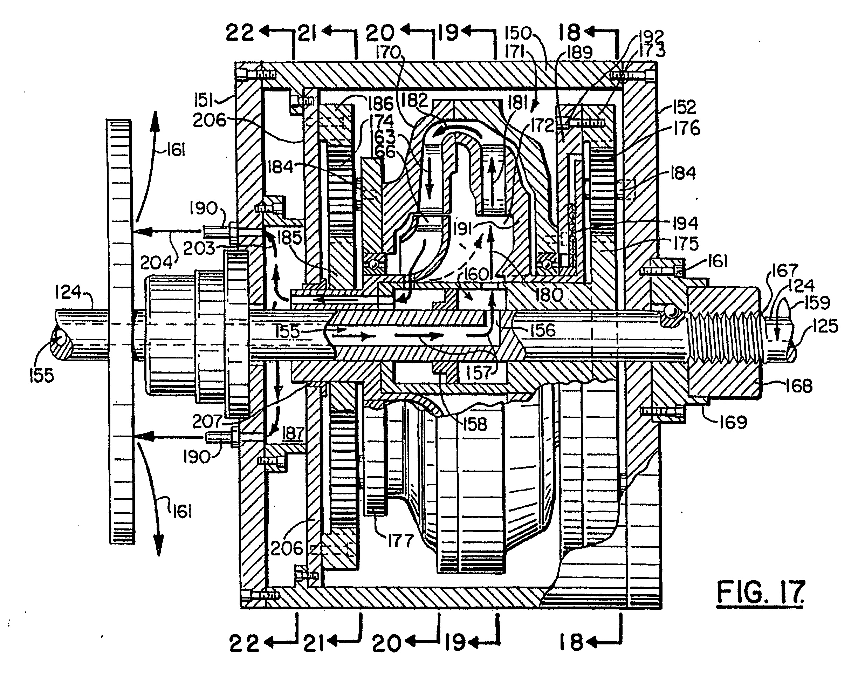

The circulation of fluid 115 through the apparatus 110 begins at reservoir section 112 wherein a volume of liquid 115 is contained below fluid surface 116 as shown. The complete travel of fluid 115 through the apparatus 110 is completed when fluid exits chamber 128 and strikes flinger plate 127, fluid 115 being thrown off flinger plate 127 as shown by arrows 161 in Figure 17 to strike housing 111 and then drain to reservoir section 112 of housing 111. This exiting of fluid 115 from chamber 128 so that it strikes flinger plate 127 creates very small bubbles in fluid 115 that will be the subject of combustion when that aerated fluid 115 again enters chamber 128 via shaft 124 bore 155 as will be described more fully herein.

In Figures 13-15, fluid 115 from reservoir section 112 is first pumped with pump 133 to flow outlet line 132. This pumping is accomplished initially with a starter motor 142 that rotates shaft 124. The rotating shaft 124 then rotates pump 133 using power take off 136.

Fluid is transferred from reservoir section 112 via outlet port 135 to suction line 134. Fluid flows from suction line 134 to pump 133 and then to flow outlet line 132. The fluid 115 then flows through fluid control valve 131 to flow inlet line 130. A bypass flow line 140 enables a user to divert flow at control valve 131 so that only a desired volume of fluid enters flow inlet line 130 and hollow bore 155 of shaft 124 at swivel or rotary fluid coupling 129. Once fluid 115 is transmitted to bore 155, it flows into the interior 171 of chamber 128 for use as a source of combustion.

Shaft 124 is connected to flow inlet line 130 with rotary fluid coupling 129. Power take off 136 can be in the form of a pair of sprockets 137, 138 connected to pump 133 and drive shaft 124 respectively as shown in Figure 14. A chain drive 139 can be used to connect the two sprockets 137, 138. Rotation of the drive shaft 124 thus effects a rotation of the pump 133 so that fluid will be pumped from reservoir section 112 or housing 111 via lines 130, 132 to bore 155 of shaft 124 once starter motor 142 is activated. If fluid 115 is to be bypassed using bypass 140, it is simply returned to reservoir section 112 via bypass line 140 and flow port 141. In this manner, the quantity of fluid 115 flowing to interior 171 can be controlled.

The configuration and inner workings of chamber 128 are shown more particularly in Figures 15-17. Shaft 124 supports chamber 128. The chamber 128 end wall plates 151, 152 and canister wall 150 are rigidly fastened to shaft 124 and rotate therewith. In Figure 17,' the starter end 125 of shaft 124 has an external threads 167 that accepts lock nut 168. Lock ring 169 bolts to end plate 152 at bolted connections 161. Key 165 locks lock ring 169 and thus end plate 152 to shaft 124. Such a lock ring 169 and lock nut 168 arrangement is also used to affix end plate 151 to the fluid inlet end portion 126 of shaft 124.

Starter motor 142 can be an electric or combustion engine for example. The motor 142 is mounted upon motor mount 143. Shaft 124 provides a sheave 144. Motor drive 142 has a sheave 145. A sheave 146 is provided on clutch 153. The sheaves 144, 145, 146 are interconnected with drive belt 149. Clutch 153 also includes a sheave support 147 and a lever 148 that is pivotally attached to mount 143 and movable as shown by arrow 154 in Figure 13.

When motor 142 is started and clutch 153 engaged, shaft 124 rotates sprocket 138 and (via chain 139) sprocket 137. The sprocket 137 activates and powers pump 133 to pump fluid 115 from outlet line 134 to line 132 and through line 130 to swivel (e.g. a deublin swivel) fluid coupling 129 mounted on shaft 124. Fluid 115 enters bore or fluid flow channel 155 to port 156 and then to an accumulation or pre-ignition chamber 172. Chamber 172 is preferably always filled with fluid 115.

In order to initiate operation, fluid is pumped using pump 123 and motor 142 from reservoir 115 into bore 155 of shaft 124 and then into transverse port 156 as shown by arrows 157. Fluid discharged from port 156 enters annular chamber 160. Fluid then enters chamber 171 via port 188.

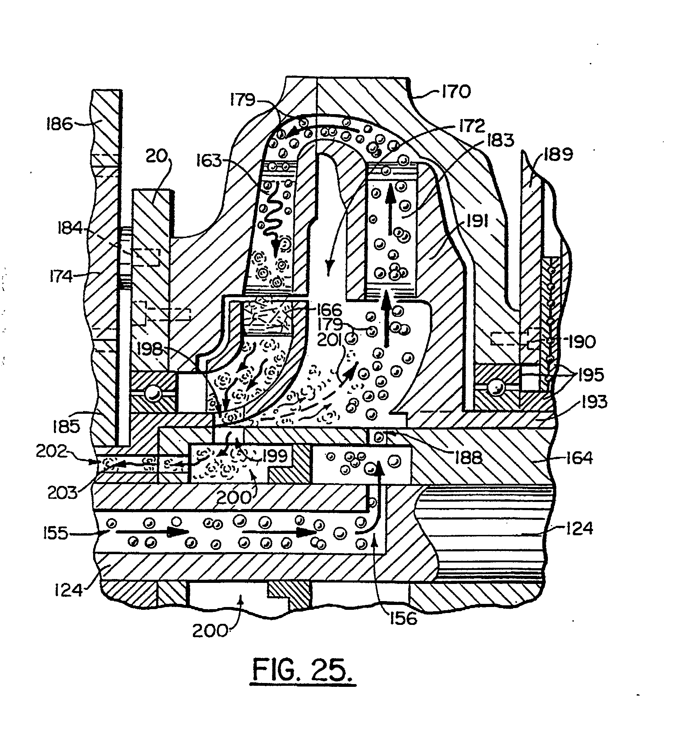

Fluid at arrows 180, 181 strikes compression-impulse drive blades 183 and the fluid rotates with them counterclockwise in relation to starter end 125 of drive shaft 124. Continued fluid flow in the direction of arrow 181, 182 causes fluid 115 to hit combustion channel blades 163 and then torque blades 166. As shown in Figure 25 fluid 115 carries a large number of small bubbles 179 to blades 183, 163, 166. The compression-impulse drive blades 183 are so angled (i.e. blade pitch), that they act as a pump to pitch up fluid in chamber 172 and drive it into combustion channel blades 163 that are a part of and rotate with combustion channel blades housing 170 (see arrows 180, 181, 182 in Figure 17).

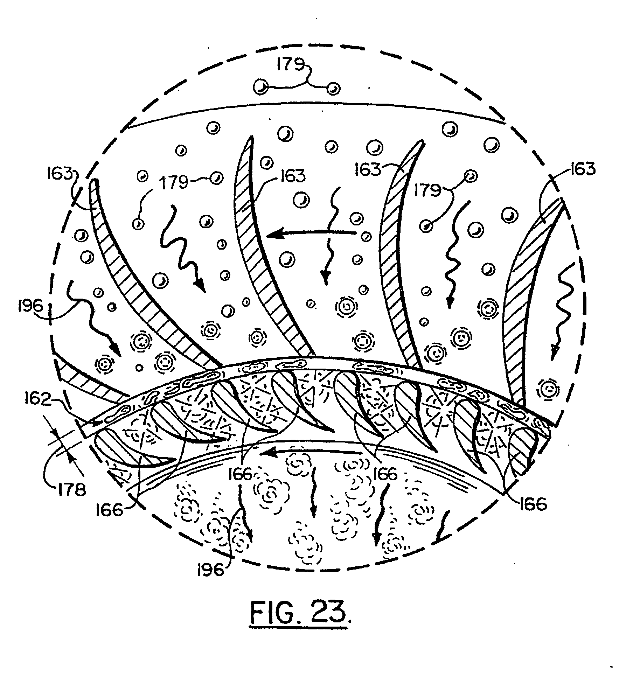

In order to start the engine 110, the user cranks the starter motor 142 until drive shaft 124 rotates to a desired r.p.m. On an actual prototype apparatus 110, the starter motor 142 is cranked until the drive shaft 124 reaches about 1500 - 1600 r.p.m. At that time, the small air bubbles 179 (containing oxygen and vapor from the fluid 115) begin to burn at the combustion site, designated as 162 in Figures 17 and 23 so that the shaft 124 can be driven.

When the matter contained in these bubbles 179 begins to burn, the bubbles 179 expand. In Figures 17, 23 and 25, blades or vanes 163, 166 on two rotary parts capture this expansion. The blades or vanes 163, 166 are so positioned and so shaped that two rotary parts rotate at different rotational speeds to compress and ignite the bubbles as one vane 163 closely engages another vane. These two rotary parts are the drive sleeve 164 carrying blades 166 and the combustion channels blade housing 170 carrying blades 163. These rotary parts 164 and 170 are part of the mechanism contained within chamber 28. The blades 163 and housing 170 are connected to a set of planet gears 174 (i.e. left planet gears) and a ring gear 173 (i.e. right ring gear).

The concept of the apparatus 110 of the present invention is to provide an internal energy source (i.e. combustion at site 162 in Figures 23-25) in order to put torque on the main drive shaft 124 so that the engine apparatus 110 continues to run from the generated energy of internal combustion. Because of the gearing provided by the assembly of ring gears 173, 186 and planet gears 174, 176 and sun gears 175, 185 the blades 166 rotate faster than blades 163. The close spacing between blades 163, 166 (about 0.030 inches, that is 0.762 mm) compresses bubbles 179 at combustion site 162 as each bubble 179 is pinched and compressed in between passing blades 163, 166. Ignition is thus a function of compression of each bubble 179, somewhat analogous to the compressive ignition of a diesel engine.

The right ring gear 173 and right sun gear 175 on the output side (right side) rotate at a faster speed than the output (right side) planet gear 176. The right planet gears are connected to right end wall 152. The wall 152 is attached rigidly to shaft 124.

On the left side, planet gear 174 is rotatably mounted to mounting plate 177 with shaft 184. Plate 177 is rigidly mounted to (e.g. bolted) and rotates with combustion channel blades housing 170 (see Figure 25). Note that the housing 170 thus carries both the left planet gears 184 using plate 177 and the right (output) ring gear 173 using plate 189. When the left planet gear 184 is driven, the right ring gear 173 is simultaneously driven.

When the left sun gear 185 is driven, the right sun gear 175 is also driven, because the sun gears 175, 185 are connected to and rotate with the drive sleeve 164 that rotates independently of main drive shaft 124. The left ring gear 186 runs at same speed of shaft 124 because it is bolted to thrust wall 206 and thus to chamber 128 at canister wall 150. Bushing 207 is positioned in between thrust wall 206 and drive sleeve 164.

Plant gear (right) 176 and compression-impulse drive blades 183 run at the same rotational speed as drive shaft 124. If the shaft 124 is rotating at an index speed of 1 r.p.m., the left ring gear 186 and right planet gear 170 also rotate at 1 r.p.m. If the ring gear 186 is rotating at 1 r.p.m., the left planet gear 174 will rotate about the shaft at 33% slower rotational speed i.e. 0.66 r.p.m. The planet gear 174 will rotate several times about its own rotational axis as it rotates 0.66 r.p.m. relative to the rotational axis of the shaft. Stated differently, the planet gear mounting plate 177 carrying left plante gears 174 will rotate 0.66 r.p.m. for each 1.0 r.p.m. of shaft 124.

The result of this gearing is that sun gears 175, 185 connected together with drive sleeve 164 will rotate at about 1.5 r.p.m. for each 1.0 r.p.m. of shaft 124 when planet mouting plate 177 is caused by fluid flow to rotate at about the same speed as shaft 124.

Fluid 115 carries small bubbles 179 that will burn at combustion site 162. The interface at combustion site 162 is a very small dimension of about 0.762 millimetres of spacing between blades 163 and 166, that designated spacing indicated by arrow 178 in Figure 23.

Once the starter motor reaches about 1600 r.p.m., a stream of fluid 115 containing bubbles 179 which have been impulsed by blades 183 is introduced at interface 162 (combustion site) to generate combustion. The combustion produces an expansion that rotates blades 166 (and everything connected to blades 166) counterclockwise (see arrow 159 in Figure 17) when looking at the starter end 125 of drive shaft 124. These additional parts that rotate with blades 166 include drive sleeve 164 and sun gears 175, 185.

Combustion channel blades housing 170 is a rotary member that is fastened at bolted connection 205 to plate 189 (see Figures 17 and 25). Plate 189 is bolted to ring gear 173 at bolted connection 192 as shown in Figure 17. The assembly of combustion channel blades housing 170, the combustion channel blades 163, plate 189, and ring gear 173 rotate as a unit. The compression-impulse drive blades 183 are mounted to and rotate with rotary member 191 that is mounted for rotation upon cylindrical sleeve 193 that is also connected for rotation to right planet gear mounting plate 194. Thrust bearing assembly 195 forms an interface in between the two afore described rotating assemblies. One such assembly includes rotating member 191, sleeve 193, and planetary gear mounting plate 194. The other rotating assembly includes combustion channel blades housing 170, plate 189, and ring gear 173. Each of the planet gears 174, 176 provides a planet gear shaft 184 that attaches it to an adjacent mounting plate 177 or 194.

As fluid 115 reaches the combustion site 162 (see Figures 23 and 25), the fluid 115 continues movement in the direction of arrows 196 from blades 163 to combustion site 162. Fluid 115 then flows through and below blades 166 in Figure 23. After combustion occurs, the fluid 115 enters annular chamber 197 and port 198. Flow divider 158 separates chambers 160, 200. Some of the fluid flows through port 199 into annular chamber 200 as shown in Figure 25. Other flow, as indicated by arrow 201, returns to chamber 172. One or more longitudinally extending channels 202 are provided in drive sleeve 164 for channeling fluid from annular chamber 200 into reservoir 187 as shown in Figures 17 and 25. This flow of fluid from torque blades 166 to jets 190 is shown by arrows 203 in Figure 17. Fluid exiting reservoir 187 is dispensed by jets 190 against flinger plate 127 as indicated by arrows 204 in Figure 17.

The following table lists the parts numbers and parts descriptions as used herein and in the drawings attached hereto.

| PARTS LIST | |
|---|---|
| Part Number | Description |
| 10 | combustion engine |
| 11 | housing |
| 12 | reservoir section |
| 13 | cover |
| 14 | interior |
| 15 | fluid |
| 16 | fluid level |
| 17 | feet |
| 18 | flange |
| 19 | flange |
| 20 | beam |
| 21 | beam |
| 22 | bearing |
| 23 | bearing |
| 24 | drive shaft |
| 25 | starter end portion |
| 26 | fluid inlet end portion |
| 27 | flinger plate |
| 28 | chamber |
| 29 | rotary fluid coupling |
| 30 | flow inlet line |
| 31 | fluid control valve |
| 32 | flow outlet line |
| 33 | pump |
| 34 | suction line |
| 35 | flow port |
| 36 | power take off |
| 37 | sprocket |
| 38 | sprocket |
| 39 | chain drive |
| 40 | bypass flow line |
| 41 | flow port |
| 42 | starter motor |
| 43 | motor mount |
| 44 | sheave |
| 45 | sheave |
| 46 | sheave |
| 47 | sheave support |
| 48 | lever |
| 49 | belt |
| 50 | cylindrical canister |
| 51 | circular end wall plate |
| 52 | circular end wall plate |
| 53 | clutch |
| 54 | arrow |
| 55 | shaft flow channel |
| 56 | transverse passageway |
| 57 | arrows |
| 58 | bushing |
| 59 | sleeve |
| 60 | impulse drive unit |
| 61 | arrow |
| 62 | combustion site |
| 63 | impulse drive blades |
| 65 | combustion channels |
| 66 | externally threaded portion |
| 67 | lock nut |
| 68 | lock ring |
| 69 | bolted connection |
| 70 | key |
| 71 | interior |
| 72 | bearing |
| 73 | sleeve |
| 74 | flow outlet opening |
| 75 | arrow |
| 76 | blades |
| 77 | compression drive unit |
| 78 | bolted connection |
| 79 | bubbles |
| 80 | arrow |
| 81 | arrow |
| 82 | cavity |
| 83 | combustion channel blades |
| 84 | combustion channel unit |
| | inner housing |
| 85 | planet gear mounting plate |
| 86 | bolted connection |
| 87 | planet gear |
| 88 | sun gear |
| 89 | ring gear |
| 90 | fluid outlet jet |
| 91 | arrow |
| 92 | bolted connection |
| 93 | splined connection |
| 94 | bolted connection |
| 95 | rotary bushing |
| 96 | bearing |
| 100 | gap |
| 101 | flow channel |
| 102 | reservoir |
| 103 | receptacle |
| 104 | bolted connection |
| 105 | connection |
| 106 | arrow |
| 110 | combustion engine |
| 111 | housing |
| 112 | reservoir section |
| 113 | cover |
| 114 | interior |
| 115 | fluid |
| 116 | fluid level |
| 117 | feet |
| 118 | flange |
| 119 | flange |
| 120 | beam |
| 121 | beam |
| 122 | bearing |
| 123 | bearing |
| 124 | drive shaft |
| 125 | starter end portion |
| 126 | fluid inlet end portion |
| 127 | flinger plate |
| 128 | chamber |
| 129 | rotary fluid coupling |
| 130 | flow inlet line |
| 131 | fluid control valve |
| 132 | flow outlet line |
| 133 | pump |
| 134 | suction line |
| 135 | outlet port |
| 136 | power take off |
| 137 | sprocket |
| 138 | sprocket |
| 139 | chain drive |
| 140 | bypass flowline |
| 141 | flow port |
| 142 | starter motor |
| 143 | motor mount |
| 144 | sheave |
| 145 | sheave |
| 146 | sheave |
| 147 | sheave support |
| 148 | lever |
| 149 | drive belt |
| 150 | cylindrical canister wall |
| 151 | circular end wall plate |
| 152 | circular end wall plate |
| 153 | clutch |
| 154 | arrow |
| 155 | shaft flow bore |
| 156 | transverse port |
| 157 | arrow |
| 158 | flow divider |
| 159 | shaft rotation arrow |
| 160 | annular chamber |
| 161 | bolted connection |
| 162 | combustion site |
| 163 | combustion channel blade |
| 164 | drive sleeve |
| 165 | key |
| 166 | torque blade |
| 167 | external threads |
| 168 | lock nut |
| 169 | lock ring |
| 170 | combustion channel blades housing |
| 171 | interior |
| 172 | pre-ignition chamber |
| 173 | right ring gear |
| 174 | left planet gear |
| 175 | right sun gear |
| 176 | right planet gear |
| 177 | planet gear mounting plate |
| 178 | arrow |
| 179 | bubbles |
| 180 | arrow |
| 181 | arrow |
| 182 | arrow |
| 183 | compression-impulse drive blade |
| 184 | planet gear shaft |
| 185 | left sun gear |
| 186 | left ring gear |
| 187 | reservoir |
| 188 | port |
| 189 | plate |
| 190 | jets |
| 191 | rotary member |
| 192 | bolted connection |
| 193 | sleeve |
| 194 | planetary gear mounting plate |
| 195 | thrust bearing assembly |
| 196 | arrows |
| 197 | chamber |
| 198 | port |
| 199 | port |
| 200 | annular chamber |
| 201 | arrow |
| 202 | channels |
| 203 | arrow |
| 204 | arrow |
| 205 | bolted connection |
| 206 | thrust wall |
| 207 | bushing |

The foregoing embodiments are presented by way of example only; the scope of the present invention is to be limited only by the following claims.

## Claims

1. A combustion engine (10) comprising:
a) a housing (11) with an interior (14) that includes a fluid reservoir (12);
b) the reservoir (12) having a fluid (15) for combustion;
c) means (27) for forming bubbles in the fluid (15);
d) a drive shaft (24) mounted on the housing (11) and including a portion that extends into the housing interior (14);
h) a chamber (28) mounted on the drive shaft (24) for rotation therewith;
i) a power generating system (60, 63, 65, 83) positioned within the chamber interior (71) for rotating the drive shaft (24) when fluid combustion takes place within the chamber interior (71);
j) a circulation channel (30, 32, 55) for supplying fluid (15) from the reservoir (12) to the power generator (60, 63, 65, 83) along a continuous flow path;
k) the power generating unit including at least two rotating members (60, 65), each with vanes (63, 83) thereon, the respective vanes (63, 83) being closely positioned with a small gap (100) therebetween;
l) starter means (42) for preliminarily rotating the shaft (24); and
m) wherein the shaft (24) includes an opening (55) forming part of the circulation channel.

2. The engine of claim 1 wherein the power generating unit (60, 63, 65, 83) includes a gear arrangement (87, 88, 89) for transferring rotary power from one of the rotating members (60, 65) to the chamber (28) and drive shaft (24).

3. The engine of claim 2 wherein the gear arrangement (87, 88, 89) includes a planetary gear set (87).

4. The engine of any preceding claim wherein the fluid (15) has a fluid surface (16) within the reservoir (12) and the chamber (28) is positioned above the fluid surface (16).

5. The engine of any preceding claim wherein the fluid (15) is preliminarily pumped through the circulation channel (30, 32, 55) when the starter (42) is activated.

6. The engine of any preceding claim wherein the bubble forming means (27) includes but is not limited to a member mounted for rotation on the drive shaft (24).

7. The engine of any preceding claim wherein the vanes (63, 83) of at least one of the rotating members (60, 65) are curved.

8. The engine of any preceding claim wherein the vanes (63, 83) of at least one of the rotating members (60, 65) includes circumferentially regularly spaced apart vanes (63, 83) mounted on a circular body.

9. The engine of any one of claims 1 to 7 wherein the vanes (63, 83) of each of the rotating members (60, 65) includes circumferentially regularly spaced apart vanes (63, 83) mounted on a circular body.

## Patentansprüche

1. Verbrennungsmaschine (10), aufweisend:
a) ein Gehäuse (11) mit einem Innenraum (14), welcher ein Fluidreservoir (12) umfasst;
b) das Reservoir (12) welches ein Fluid (15) für die Verbrennung enthält;
c) Mittel (27) zum Ausbilden von Blasen im Fluid (15);
d) eine Antriebswelle (24), die im Gehäuse (11) angebracht ist und einen Abschnitt aufweist, welcher sich in den Gehäuseinnenraum (14) erstreckt;
h) eine Kammer (28), die auf die Antriebswelle (24) zur Rotation mit dieser angebracht ist;
i) ein Leistungserzeugungssystem (60, 63, 65, 83), das innerhalb des Kammerinnenraumes (71) posiitoniert ist, um die Antriebswelle (24) zu drehen, wenn innerhalb des Kammerinneren (71) eine Verbrennung des Fluids stattfindet;
j) einen Umlaufkanal (30, 32, 55), um Fluid (15) aus dem Reservoir (12) dem Leistungsgenerator (60, 63, 65, 82) entlang einem kontinuierlichen Strömungspfad zuzuführen;
k) wobei die Leistungserzeugungseinheit mindestens zwei Drehelemente (60, 65), jeweils mit Schaufeln (63, 83) daran umfasst, wobei die jeweiligen Schaufeln (63, 83) nahe aneinander positioniert sind, wobei ein kleiner Spalt (100) zwischen ihnen besteht;
l) Startmittel (42), um die Welle (24) vorab zur Rotation zu bringen; und
m) wobei die Welle (24) eine Öffnung (55) aufweist, die Teil des Umlaufkanals ist.

2. Maschine nach Anspruch 1, wobei die Leistungserzeugungseinheit (60, 63, 65, 83) eine Getriebeanordnung (87, 88, 89) zum Übertragen von Drehleistung von einem der Rotationselemente (60, 65) auf die Kammer (28) und die Antriebswelle (24) umfasst.

3. Maschine nach Anspruch 2, wobei die Getriebeanordnung (87, 88, 89) einen Planetengetriebesatz (87) umfasst.

4. Maschine nach einem der vorstehenden Ansprüche, wobei das Fluid (15) eine Fluidoberfläche (16) innerhalb des Reservoirs (12) aufweist und die Kammer (28) oberhalb der Fluidoberfläche (16) positioniert ist.

5. Maschine nach einem der vorstehenden Ansprüche, wobei das Fluid (15) vorab durch den Umlaufkanal (30, 32, 55) gepumpt wird, wenn der Starter (42) aktiviert wird.

6. Maschine nach einem der vorstehenden Ansprüche, wobei das Blasenbildungsmittel (27) ein Element umfasst, ohne darauf beschränkt zu sein, das zur Rotation auf der Antriebswelle (24) angebracht ist.

7. Maschine nach einem der vorstehenden Ansprüche, wobei die Schaufeln (63, 83) zumindest eines der Rotationselemente (60, 65) gekrümmt sind.

8. Maschine nach einem der vorstehenden Ansprüche, wobei die Schaufeln (63, 83) mindestens eines der Rotationselemente (60, 65) umfangsseitig regelmäßig beabstandete Schaufeln (63, 83) umfassen, die auf einem kreisförmigen Körper montiert sind.

9. Maschine nach einem der Ansprüche 1 bis 7, wobei die Schaufeln (63, 83) jedes der Rotationselemente (60, 65) umfangsseitig regelmäßig beabstandete Schaufeln (63, 83), welche auf einem kreisförmigen Körper montiert sind, aufweisen.

## Revendications

1. Moteur à combustion (10) comprenant :
a) un carter (11) ayant une partie intérieure (14) qui comprend un réservoir de fluide (12),
b) le réservoir (12) ayant un fluide (15) pour la combustion,
c) un moyen (27) destiné à former des bulles dans le fluide (15),
d) un arbre d'entraînement (24) monté sur le carter (11) et comprenant une partie qui s'étend dans la partie intérieure (14) du carter,
h) une chambre (28) montée sur l'arbre d'entraînement (24) en vue d'une rotation avec celui-ci,
i) un système de génération de puissance (60, 63, 65, 83) positionné au sein de la partie intérieure (71) de la chambre, destiné à faire tourner l'arbre d'entraînement (24) lorsque la combustion du fluide a lieu au sein de la partie intérieure (71) de la chambre,
j) un canal de circulation (30, 32, 55) destiné à fournir un fluide (15) provenant du réservoir (12) au générateur de puissance (60, 63, 65, 83) suivant une voie d'écoulement continue,
k) l'unité de génération de puissance comprenant au moins deux éléments tournants (60, 65), chacun comportant des ailettes (63, 83) sur celui-ci, les ailettes respectives (63, 83) étant positionnées de façon rapprochée avec un petit espacement (100) entre elles,
l) un moyen de démarreur (42) destiné à faire tourner de façon préalable l'arbre (24), et
m) où l'arbre (24) comprend une ouverture (55) faisant partie du canal de circulation.

2. Moteur selon la revendication 1, dans lequel l'unité de génération de puissance (60, 63, 65, 83) comprend un agencement d'engrenages (87, 88, 89) destiné à transférer la puissance de rotation de l'un des éléments tournants (60, 65) à la chambre (28) et à l'arbre d'entraînement (24).

3. Moteur selon la revendication 2, dans lequel l'agencement d'engrenages (87, 88, 89) comprend un jeu d'engrenages satellites (87).

4. Moteur selon l'une quelconque des revendications précédentes, dans lequel le fluide (15) comporte une surface de fluide (16) à l'intérieur du réservoir (12), et la chambre (28) est positionnée au-dessus de la surface de fluide (16).

5. Moteur selon l'une quelconque des revendications précédentes, dans lequel le fluide (15) est pompé au préalable par l'intermédiaire du canal de circulation (30, 32, 55) lorsque le démarreur (42) est activé.

6. Moteur selon l'une quelconque des revendications précédentes, dans lequel le moyen de formation de bulles (27) comprend, mais sans s'y limiter, un élément monté en vue d'une rotation sur l'arbre d'entraînement (24).

7. Moteur selon l'une quelconque des revendications précédentes, dans lequel les ailettes (63, 83) d'au moins l'un des éléments tournants (60, 65) sont courbes.

8. Moteur selon l'une quelconque des revendications précédentes, dans lequel les ailettes (63, 83) d'au moins l'un des éléments tournants (60, 65) comprennent des ailettes espacées régulièrement suivant la circonférence (63, 83) montées sur un corps circulaire.

9. Moteur selon l'une quelconque des revendications 1 à 7, dans lequel les ailettes (63, 83) de chacun des éléments tournants (60, 65) comprennent des ailettes régulièrement espacées suivant la circonférence (63, 83) montées sur un corps circulaire.
